(19) Europäisches Patentamt
European Patent Office
Office européen des brevets

(11) **EP 0 953 968 B1**

(12) **EUROPEAN PATENT SPECIFICATION**

(45) Date of publication and mention
of the grant of the patent:
**05.01.2005 Bulletin 2005/01**

(51) Int Cl.[7]: **G10L 15/06**

(21) Application number: **99303417.2**

(22) Date of filing: **30.04.1999**

(54) **Speaker and environment adaptation based on eigenvoices including maximum likelihood method**

Sprecher- und Umgebungsadaptation auf der Basis von Stimm-Eigenvektoren sowie der Maximalwahrscheinlichkeitsmethode

Adaptation au locuteur et à l'environnement basée sur des vecteurs propres de voix incluant la méthode de vraisemblance maximum

(84) Designated Contracting States:
**AT BE CH CY DE DK ES FI FR GB GR IE IT LI LU MC NL PT SE**

(30) Priority: **30.04.1998 US 70054**
**30.04.1998 US 70208**

(43) Date of publication of application:
**03.11.1999 Bulletin 1999/44**

(73) Proprietor: **MATSUSHITA ELECTRIC INDUSTRIAL CO., LTD.**
**Kadoma-shi, Osaka 571-8501 (JP)**

(72) Inventors:
• **Nguyen, Patrick**
**CH-1027 Lonay (CH)**
• **Kuhn, Roland**
**Santa Barbara, California 93110 (US)**
• **Junqua, Jean-Claude**
**Santa Barbara, California 93111 (US)**

(74) Representative: **Senior, Alan Murray**
**J.A. KEMP & CO.,**
**14 South Square,**
**Gray's Inn**
**London WC1R 5JJ (GB)**

(56) References cited:
**US-A- 4 903 306** **US-A- 5 572 624**

• **KUHN R ET AL: "Fast speaker adaptation using a priori knowledge" PROCEEDINGS. ICASSP99 (CAT. NO.99CH36258), 1999 IEEE INTERNATIONAL CONFERENCE ON ACOUSTICS, SPEECH, AND SIGNAL PROCESSING., vol. 2, 15 - 19 March 1999, pages 749-752, XP002132963 Piscataway, NJ, USA ISBN: 0-7803-5041-3**
• **KUHN R ET AL: "Eigenfaces and eigenvoices: dimensionality reduction for specialized pattern recognition" 1998 IEEE SECOND WORKSHOP ON MULTIMEDIA SIGNAL PROCESSING (CAT. NO.98EX175), REDONDO BEACH, CA, USA, 7 - 9 December 1998, pages 71-76, XP002132964 1998, Piscataway, NJ, USA, IEEE, USA ISBN: 0-7803-4919-9**
• **SIROVICH L ET AL: "LOW-DIMENSIONAL PROCEDURE FOR THE CHARACTERIZATION OF HUMAN FACES" JOURNAL OF THE OPTICAL SOCIETY OF AMERICA - A,US,OPTICAL SOCIETY OF AMERICA, WASHINGTON, vol. 4, no. 3, 1 March 1987 (1987-03-01), pages 519-524, XP000522491 ISSN: 0740-3232**
• **LEGGETER C.J.; WOODLAND P.C.: 'Maximum likelihood linear regression for speaker adaptation of continuous density hidden markov models' COMPUTER SPEECH AND LANGUAGE, ACADEMIC PRESS vol. 9, no. 2, 01 April 1995, LONDON, GB, pages 171 - 185**
• **JEAN-LUC GAUVAIN; CHIN-HUI LEE: 'Bayesian learning for hidden markov model with gaussian mixture state observation densities' SPEECH COMMUNICATION, ELSEVIER SCIENCE PUBLISHERS vol. 11, no. 2, June 1992, AMSTERDAM, NL, pages 205 - 213**

- **MATHAN L.; MICLET L.: 'Speaker hierarchical clustering for improving speaker-independent HMM word recognition' ICASSP 90. 1990 INTERNATIONAL CONFERENCE ON ACOUSTICS, SPEECH AND SIGNAL PROCESSING (CAT. NO.90CH2847-2) vol. 1, 03 April 1990, ALBUQUERQUE, NM, USA, pages 149 - 152**

**Description**

The present invention relates generally to speech recognition and more particularly to speaker adaptation whereby the parameters of a speech recognition model are revised to better recognize the speech of a new speaker.

Speech recognition systems may be speaker dependent or speaker independent. Speaker dependent systems are trained to understand what a single individual says, by being given a large number of examples of words uttered by that individual (these examples are called the "training data"). Speaker dependent systems tend to be very accurate for the individual they are trained on, and inaccurate for everybody else. Speaker independent systems are designed to be used by anybody who speaks the language of the application; typically, they are trained on data from many different people. The error rate for a speaker independent system, carrying out recognition on a speaker not in the training data, is roughly two to three times higher than the error rate for a comparable speaker dependent system carrying out recognition on the speaker it is trained on.

In an effort to improve performance, many speech recognition systems include facilities for performing speaker adaptation, whereby the speech recognition system is adjusted during use to reduce the error rate. There are basically three speaker adaptation approaches described in the current technical literature. These are:

(1) Speaker normalization (also called "transformation") -observations of the digitized signal generated by the new speaker feature vectors are transformed to resemble more closely observations from a reference speaker, for whom a speaker dependent system has been trained. In some instances the transformation is in the opposite direction: a reference pattern is transformed to resemble the data from the new speaker more closely. This approach is described in "Speaker adaptation based on Transfer Vector Field Smoothing using Maximum a Posteriori Probability Estimation" M Tonomura et al., Computer Speech and Language, Vol. 10, No. 2, pp 117-132 (April 1996).

(2) Speaker clustering -observations of the new speaker are used to select a cluster of training speakers; each cluster is associated with a complete set of Hidden Markov Models (HMMs) trained only on the speakers in this cluster. Once the cluster most suitable for the speaker has been chosen, recognition is carried out using only HMMs from this cluster. This approach is described in "Speaker Hierarchical Clustering for Improving Speaker-independent HMM Word Recognition" L Mathan et al., ICASSP 90 Vol. 1, pp 149-152 (3 April 1990).

(3) Model adaptation-certain HMM parameters are updated to reflect aspects of the adaption data. The two most popular model adaptation techniques are maximum a posteriori estimation (MAP) - see for example "Bayesian Learning for Hidden Markov Model with Guassian Mixture State Observation Densities" J L Gauvain et al., Speech Communication Vol. 11, pp 205-213 (June 1992) - and maximum likelihood linear regression (MLLR) - see for example "Maximum Likelihood Linear Regression for Speaker Adaptation of Continuous Density Hidden Markov Models" Leggeter et al., Computer Speech and Language Vol. 9, No. 2 pp 171-185 (April 1995).

While each of these adaptation techniques has proven to be beneficial, none is without some drawback. Generally speaking, the more effective adaptation techniques tend to require significant computational resources and also require a significant training effort on the part of the individual speaker.

US-4,903,306 discloses the use of eigenvoice vectors and principal component analysis to determine the closest speech model to a speaker.

The present invention, which is defined in the appended claims, brings an entirely new technique with which to carry out speaker and environment adaptation. The technique enables an initially speaker independent recognition system to quickly attain a performance level on new speakers and new acoustic environments that approach speaker dependent systems, without requiring large amounts of training data for each new speaker. We call our technique "eigenvoice adaptation". The technique employs an offline step in which a large collection of speaker dependent models is analyzed by principal component analysis (PCA), yielding a set of eigenvectors that we call "eigenvoice vectors" or "eigenvoices." This offline step is fairly computationally intensive, although it has to be performed only once. After that, each time the speech recognition system is used, it carries out a computationally inexpensive operation on adaptation data obtained from the new speaker, to obtain a vector in the space spanned by the eigenvoices. This new vector gives the adapted model for the new speaker.

Unlike model adaptation techniques such as MAP and MLLR, most of the expensive computation occurs offline in the PCA step. This allows the invention to perform speaker or environment adaptation quite quickly and with little computational expense as the recognition system is being used.

Part of the power of the invention derives from the eigenvoice representation of the collective set of training speakers and of the new individual speaker for which the recognition system is being adapted. In other words, the eigenspace developed during the PCA step represents the collective speech traits of all the training speakers. The individual eigenvectors that define this n-dimensional space are each uncorrelated or orthogonal and are listed in order of importance for explaining variation in the data. Our experience has shown that the highest order eigenvector in this array may represent a male-female dimension. When this eigenvector receives a positive weight then the speaker is likely to be male; when this eigenvector receives a negative weight then the speaker is likely to be female. However, it should be understood that the individual eigenvectors are not assigned a priori to any physical differences among speakers. Rather, the eigenvectors derive entirely from the training data when PCA is performed upon it.

As a new speaker uses the speech recognizer during adaptation, the model output parameters are constrained to be a linear combination of the previously determined eigenvoices. In other words, the speaker dependent model being trained on the new speaker must lie within the eigenvoice space previously defined by the training speakers. This is a comparatively inexpensive computational operation. The technique quickly generates a good speaker dependent model even if only a small quantity of adaptation speech is used. The technique thus lends itself to speaker and environment adaptation applications where a large quantity of adaptation data may not be available. For example, the technique would work well in a speech-enabled interactive marketing system where the new speaker responds by telephone to system navigation prompts and the system adapts to the new speaker automatically as the speaker proceeds to navigate through the system to place an order.

More specifically, the present invention employs a maximum likelihood technique for placing the new vector into the space spanned by the eigenvoices. The maximum likelihood technique involves constructing an auxiliary function based on the observation data from the new speaker and also based on the knowledge of how the Hidden Markov Models are constructed. Using this auxiliary function, a maximum likelihood vector is obtained by taking derivatives and finding the local maxima. This maximum likelihood vector is thus inherently constrained within the space spanned by the eigenvoices and represents the optimal representation within that space for the new speaker given the available input speech data.

The maximum likelihood technique employed by the invention offers a number of important advantages. First, the adapted model constructed from the maximum likelihood vector always generates the optimal set of HMM models, given the quantity of observation data.

Second, although the maximum likelihood technique involves some computation, the computational burden is quite inexpensive because the eigenvoice representation dramatically reduces the number of parameters needed to describe a person's speech. Whereas typical Hidden Markov Model representations involve thousands of floating point number parameters, the eigenvoice representation of the invention requires far fewer parameters; a typical embodiment might employ 25-100 parameters to represent a given speaker, although the system will work with even fewer parameters than these. Computational burden is also significantly reduced with the present invention because the eigenvectors are orthogonal, allowing the maximum likelihood computation to be performed by solving a set of linear equations that a computer can calculate quite readily.

Third, the observation data does not have to include examples of each and every sound unit prescribed by the Hidden Markov Models. Thus, the maximum likelihood technique will work even if data for some of the sound units are missing. In contrast, placing the new speaker's parameters in eigenspace using a projection operation requires the speaker to utter at least one example of each and every sound unit prescribed by the Hidden Markov Models. In practical terms, the maximum likelihood technique will allow construction of a robust adapted model based on a very short, and potentially incomplete, training session. The technique thus lends itself to speaker and environment adaptation applications where a large quantity of adaptation data may not be available. For example, the technique would work well in a speech-enabled interactive marketing system where the new speaker responds by telephone to system navigation prompts and the system adapts to the new speaker automatically as the speaker proceeds to navigate through the system to place an order.

For a more complete understanding of the invention, its objects and advantages, refer to the following specification and to the accompanying drawings , in which:

Figure **1** illustrates an exemplary Hidden Markov Model (HMM), useful in understanding the invention;
Figure **2** is a dataflow diagram illustrating how to construct an eigenspace from a plurality of training speakers;
Figure **3** is a dataflow diagram illustrating how an adapted model is constructed using the eigenvoices in accordance with the invention;
Figure **4** is a simplified (two dimensional) illustration of eigenspace, comparing the projection operation with the maximum likelihood operation of the invention;
Figure **5** is a data structure diagram illustrating how the observation data from a new speaker is transformed through eigenspace into an adapted model in accordance with the invention; and
Figure **6** is a flowchart diagram illustrating the maximum likelihood eigenspace adaptation process of the invention.

To better understand the speaker adaptation technique of the invention, a basic understanding of the speech recognition system will be helpful. Most present day speech recognizers employ Hidden Markov Models (HMMs) to represent speech. The Hidden Markov Model is a modeling approach involving state diagrams. Any speech unit (such as a phrase, word, subword, phoneme or the like) can be modeled, with all knowledge sources included in that model. The HMM represents an unknown process that produces a sequence of observable outputs at discrete intervals, the outputs being members of some finite alphabet (corresponding to the predefined set of speech units). These models are called "hidden" because the state sequence that produced the observable output is not known.

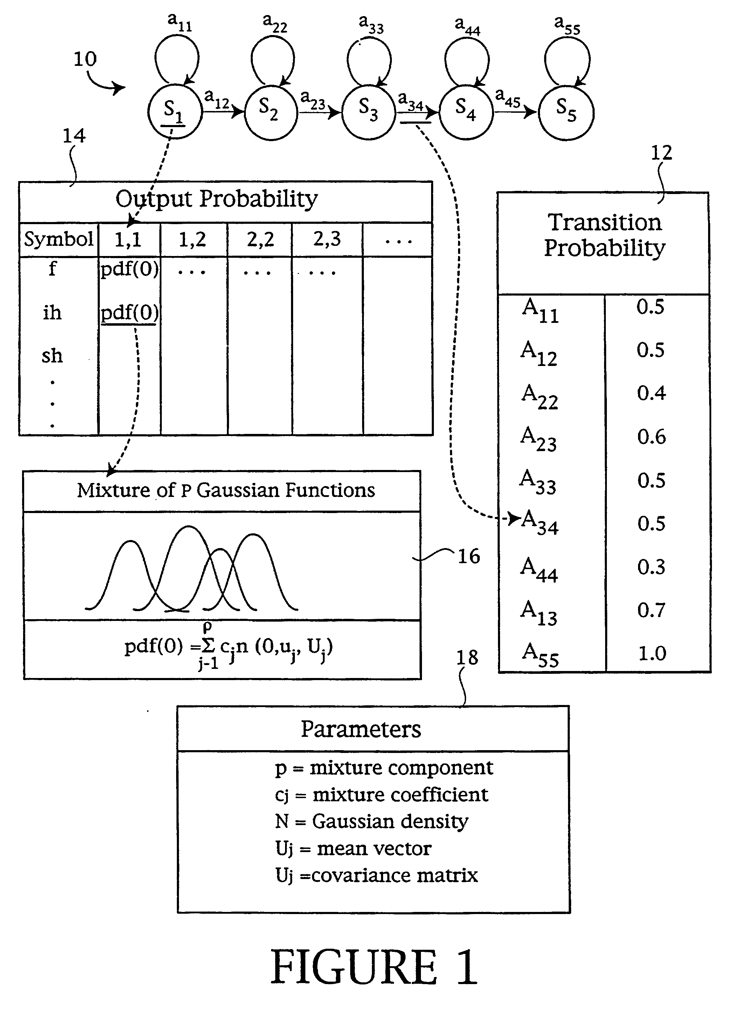

As illustrated in Figure **1**, an HMM **10** is illustrated by a set of states (S1, S2 ... S5), vectors that define transitions between certain pairs of states, illustrated as arrows in Figure **1**, and a collection of probability data. Specifically, the Hidden Markov Model includes a set of transition probabilities **12** associated with the transition vectors and a set of output probabilities **14** associated with the observed output at each state. The model is clocked from one state to another at regularly spaced, discrete intervals. At clock-time, the model may change from its current state to any state for which a transition vector exists. As illustrated, a transition can be from a given state back to itself.

The transition probabilities represent the likelihood that a transition from one state to another will occur when the model is clocked. Thus, as illustrated in Figure **1**, each transition has associated with it a probability value (between 0 and 1). The sum of all probabilities leaving any state equals 1. For illustration purposes, a set of exemplary transition probability values has been given in transition probability Table **12**. It will be understood that in a working embodiment these values would be generated by the training data, with the constraint that the sum of all probabilities leaving any state equals 1.

Every time a transition is taken, the model can be thought of as emitting or outputting one member of its alphabet. In the embodiment illustrated in Figure **1**, a phoneme-based speech unit has been assumed. Thus the symbols identified in output probability Table **14** correspond to some of the phonemes found in standard English. Which member of the alphabet gets emitted upon each transition depends on the output probability value or function learned during training. The outputs emitted thus represent a sequence of observations (based on the training data) and each member of the alphabet has a probability of being emitted.

In modeling speech, it is common practice to treat the output as a sequence of continuous vectors as opposed to a sequence of discrete alphabet symbols. This requires the output probabilities to be expressed as continuous probability functions, as opposed to single numeric values. Thus HMMs are often based on probability functions comprising one or more Gaussian distributions. When a plurality of Gaussian functions are used they are typically additively mixed together to define a complex probability distribution, as illustrated at **16**.

Whether represented as a single Gaussian function or a mixture of Gaussian functions, the probability distributions can be described by a plurality of parameters. Like the transition probability values (Table **12**) these output probability parameters may comprise floating point numbers. Parameters Table **18** identifies the parameters typically used to represent probability density functions (pdf) based on observed data from the training speakers. As illustrated by the equation in Figure **1** at Gaussian function **16**, the probability density function for an observation vector O to be modeled is the iterative sum of the mixture coefficient for each mixture component multiplied by the Gaussian density N, where the Gaussian density has a mean vector nj and covariance matrix U j representing the cepstral or filter bank coefficient speech parameters.

The implementation details of a Hidden Markov Model recognizer may vary widely from one application to another. The HMM example shown in Figure **1** is intended merely to illustrate how Hidden Markov Models are constructed, and is not intended as a limitation upon the scope of the present invention. In this regard, there are many variations on the Hidden Markov Modeling concept. As will be more fully understood from the description below, the eigenvoice adaptation technique of the invention can be readily adapted to work with each of the different Hidden Markov Model variations, as well as with other parameter-based speech modeling systems.

Constructing the Eigenvoice Space

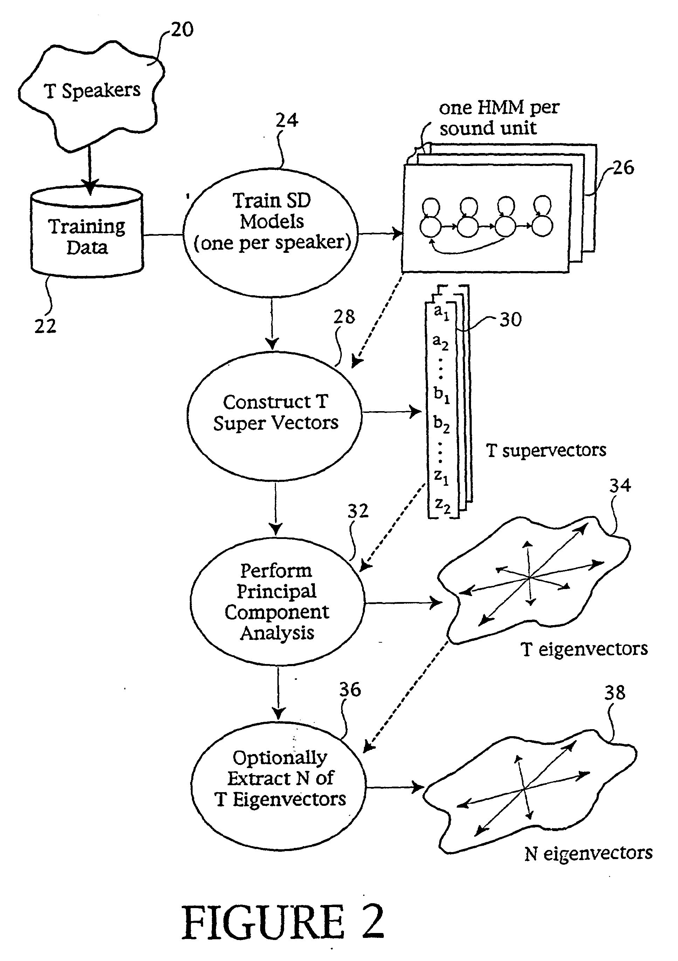

The process for constructing an eigenspace to represent a plurality of training speakers is illustrated in Figure **2**. The illustration assumes a number T of training speakers **20** provide a corpus of training data **22** upon which the eigenspace will be constructed. Preferably, a reasonably large number of speakers (on the order of 100 to 200) provide the training data. These training data are then used to train speaker dependent (SD) models as illustrated at **24**. One model per speaker is constructed at step **24**, with each model representing the sound space that is to be understood by the recognition system. In accordance with the description provided with Figure **1**, above, each model can be a set of HMMs, one HMM for each sound unit. This is illustrated in Figure **2** at **26**.

After all training data from T speakers have been used to train the respective speaker dependent models, a set of T supervectors is constructed at **28**. Thus there will be one supervector **30** for each of the T speakers. The supervector for each speaker comprises an ordered list of parameters (typically floating point numbers) corresponding to at least a portion of the parameters **18** of the Hidden Markov Models for that speaker. Parameters corresponding to each sound unit are included in the supervector for a given speaker. The parameters may be organized in any convenient order. The order is not critical; however, once an order is adopted it must be followed for all T speakers.

The ordered Hidden Markov Model parameters are then concatenated to form the supervector. The choice of which HMM parameters to include in the supervector may depend on the available processing power. We have found that constructing supervectors from the Gaussian means gives good results. If greater processing power is available, the supervectors may also include other HMM parameters, such as the transition probabilities (Table **12**, Fig. **1**) or the Covariance matrix parameters (parameters **18**, Fig. **1**). Naturally, if the Hidden Markov Models generate discrete outputs (as opposed to probability densities) then these output values may be used to comprise the supervector.

After supervectors have been constructed for each of the training speakers, principal component analysis is performed at step **32**. Principal component analysis upon T supervectors yields T eigenvectors, as at **34**. Thus, if 120 training speakers have been used the system will generate 120 eigenvectors. These eigenvectors define what we call eigenvoice space or eigenspace.

The eigenvectors that make up the eigenvoice space are uncorrelated; they each represent a different dimension across which different speakers may be differentiated. Each supervector in the original training set can be represented as a linear combination of these eigenvectors. The eigenvectors are ordered by their importance in modeling the data: the first eigenvector is more important than the second, which is more important than the third, and so on. Our experiments with this technique thus far show that the first eigenvector appears to correspond to a male-female dimension.

Although a maximum of T eigenvectors is produced at step **32**, in practice, it is possible to discard several of these eigenvectors, keeping only the first N eigenvectors. Thus at step **36** we optionally extract N of the T eigenvectors to comprise a reduced parameter eigenspace at **38**. The higher order eigenvectors can be discarded because they typically contain less important information with which to discriminate among speakers. Reducing the eigenvoice space to fewer than the total number of training speakers provides an inherent data compression that can be helpful when constructing practical systems with limited memory and processor resources.

Performing the Adaptation

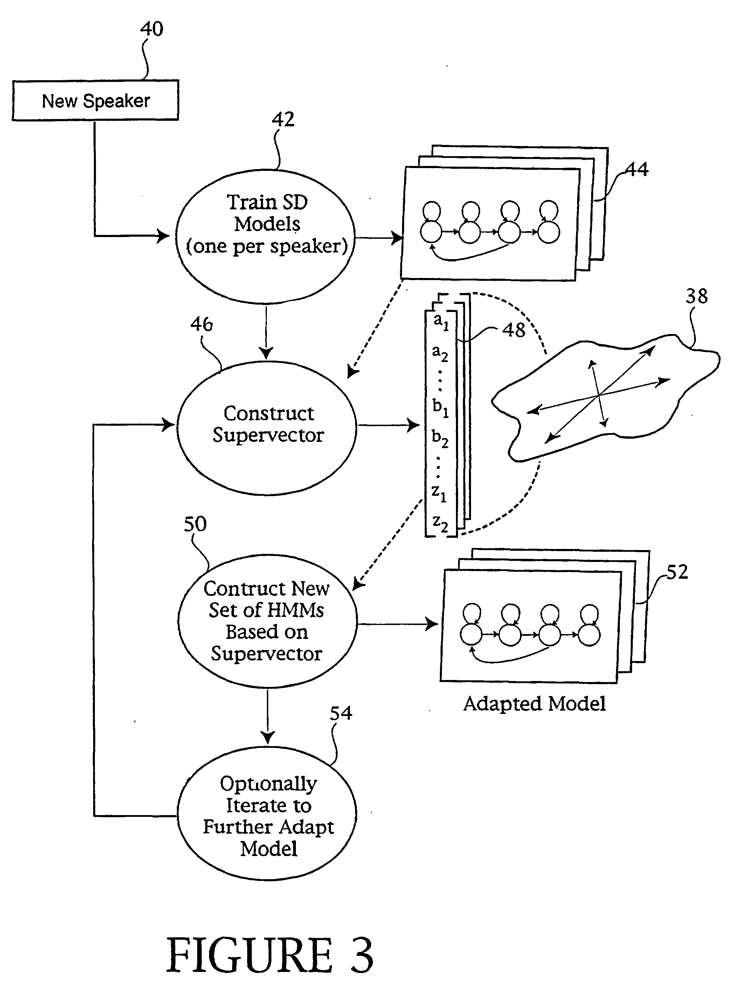

Once the eigenvoice space has been constructed, speaker adaptation or environment adaptation can be readily accomplished. While constructing the eigenspace is somewhat computationally intensive, and is typically conducted offline, adaptation is a comparatively simple computational operation that can be performed while the new speaker is using the system. Referring to Figure **3**, speech from new speaker **40** is used at step **42** to compute statistics from the parameters of the HMMs **44** (one for each sound unit) hereinafter referred to as extracted statistics. We can extract the statistics in either a supervised mode, where the training system knows the content of the training speech in advance, or in an unsupervised mode, where the speech recognition system uses a speaker independent model to determine the content of the adaptation speech.

The model built with the extracted statistics will usually be very inadequate for recognition, at least at first. The supervector is constructed at step **46** such that the supervector (supervector **48**) is constrained to fall within the eigenvoice space **38** previously created from the training speakers. Supervector **48** is constructed with the imposed constraint that the HMM model used for recognition must be a linear combination of the eigenvoices comprising eigenvoice space **38**.

The extracted statistics **44** serve to estimate the linear combination of coefficients that will comprise the adapted model for that new speaker. Thus in step **50** a new set of HMMs is constructed based on supervector **48** to generate the adapted model **52**. If desired, an optional iterative process may be performed at **54** to construct a new supervector from the adapted model **52** and thereafter to construct another set of HMMs from which a further adapted model may be constructed.

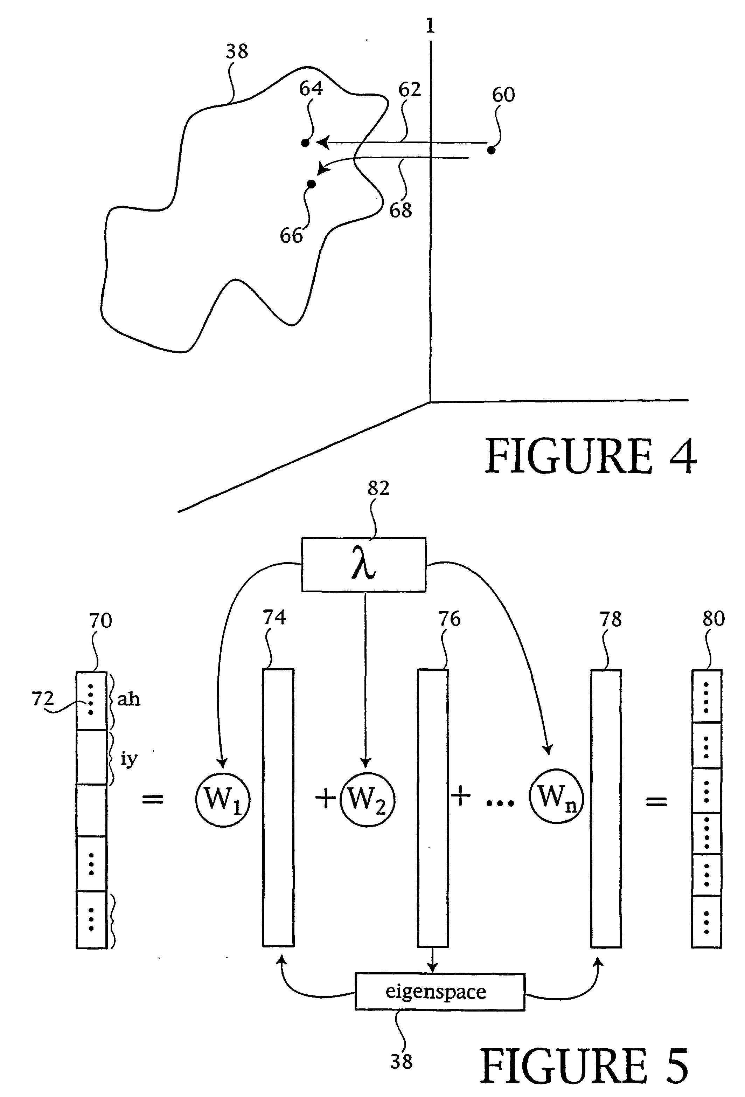

Figure **4** illustrates, in two dimensional space, the process by which the speech model of a new speaker is constrained within the eigenspace **38**. As noted above, the eigenspace is a multi-dimensional space of order less or equal to the number of eigenvectors generated through principal component analysis. Only two dimensions are illustrated in Figure **4**, to simplify the illustration, but it will be understood that eigenspace **38** is typically of much higher order than two.

The new speaker is shown diagrammatically by data point **60**. Data point **60** would correspond to the supervector **48** shown in Figure **3**. Note that the new speaker at **60** lies outside eigenspace **38.** As discussed above, the adaptation procedure involves finding a point within eigenspace that represents a good adapted model for this new speaker. The adapted model is based on the input speech uttered by the new speaker, but also constrained to be within eigenspace **38**.

One simple technique for placing the new speaker within eigenspace is to use a simple projection operation illustrated by line **62**. A projection operation finds the point within eigenspace that is as close as possible to the point outside of eigenspace corresponding to the new speaker's input speech. Thus the simple projection would place the new speaker at point **64** within eigenspace **38**. It bears noting that these points are actually supervectors from which a set of HMMs can be reconstituted.

The projection operation is a comparatively crude technique that does not guarantee that the point within eigenspace is optimal for the new speaker. Furthermore, the projection operation requires that the supervector for the new speaker contain a complete set of data to represent the entire set of HMMs for that speaker. This requirement gives rise to a significant practical limitation. When using projection to constrain a new speaker to the eigenspace, that speaker must supply enough input speech so that all speech units are represented in the data. For example, if the Hidden Markov Models are designed to represent all phonemes in the English language, then the training speaker must supply examples of all phonemes before the simple projection technique can be used. In many applications this constraint is simply not practical.

The maximum likelihood technique of the invention addresses both of the above-mentioned drawbacks of simple projection. The maximum likelihood technique of the invention finds a point **66** within eigenspace **38** that represents the supervector corresponding to a set of Hidden Markov Models that have the maximum probability of generating the speech supplied by the new speaker. For illustration purposes, the maximum likelihood process is illustrated by line **68** in Figure **4**.

Whereas the simple projection operation treats all members of the supervector as having equal importance, the maximum likelihood technique is based on probabilities arising from the actual adaptation data and thus tends to weight the more probable data more heavily. Unlike the simple projection technique, the maximum likelihood technique will work even if the new speaker has not supplied a full set of training data (i.e., data for some of the sound units are missing). In effect, the maximum likelihood technique takes into account the context under which the supervectors are constructed, namely from Hidden Markov Models involving probabilities that certain models are more likely than others to generate the input speech supplied by the new speaker.

In practical effect, the maximum likelihood technique will select the supervector within eigenspace that is the most consistent with the new speaker's input speech, regardless of how much input speech is actually available. To illustrate, assume that the new speaker is a young female native of Alabama. Upon receipt of a few uttered syllables from this speaker, the maximum likelihood technique will select a point within eigenspace that represents all phonemes (even those not yet represented in the input speech) consistent with this speaker's native Alabama female accent.

Figure **5** shows how the maximum likelihood technique works. The input speech from the new speaker is used to extract statistics for each parameter in the supervector **70**. As explained above, the supervector comprises a concatenated list of speech parameters, corresponding to cepstral coefficients or the like. In the illustrated embodiment these parameters are floating point numbers representing the Gaussian means extracted from the set of Hidden Markov Models corresponding to the new speaker. Other HMM parameters may also be used. In the illustration these HMM means are shown as dots, as at **72**. When fully populated with data, supervector **70** would contain floating point numbers for each of the HMM means, corresponding to each of the sound units represented by the HMM models. For illustration purposes it is assumed here that the parameters for phoneme "ah" are present but parameters for phoneme "iy" are missing.

The eigenspace **38** is represented by a set of eigenvectors **74, 76** and **78**. The supervector **70** corresponding to the observation data from the new speaker may be represented in eigenspace by multiplying each of the eigenvectors by a corresponding eigenvalue, designated W1, W2 ... Wn. These eigenvalues are initially unknown. The maximum likelihood technique finds values for these unknown eigenvalues. As will be more fully explained, these values are selected by seeking the optimal solution that will best represent the new speaker within eigenspace.

After multiplying the eigenvalues with the corresponding eigenvectors of eigenspace **38** and summing the resultant products, an adapted model **80** is produced. Whereas the extracted statistics of the input speech (supervector **70**) may have had some missing parameter values (the "iy" parameters, for example), the supervector **80** representing the adapted model is fully populated with values. That is one benefit of the invention. Moreover, the values in supervector **80** represent the optimal solution, namely that which has the maximum likelihood of representing the new speaker in eigenspace.

The individual eigenvalues W1, W2 ... Wn may be viewed as comprising a maximum likelihood vector, herein referred to as maximum likelihood vector. Figure **4** illustrates vector diagrammatically at **82**. As the illustration shows, maximum likelihood vector **82** comprises the set of eigenvalues W1, W2 ... Wn.

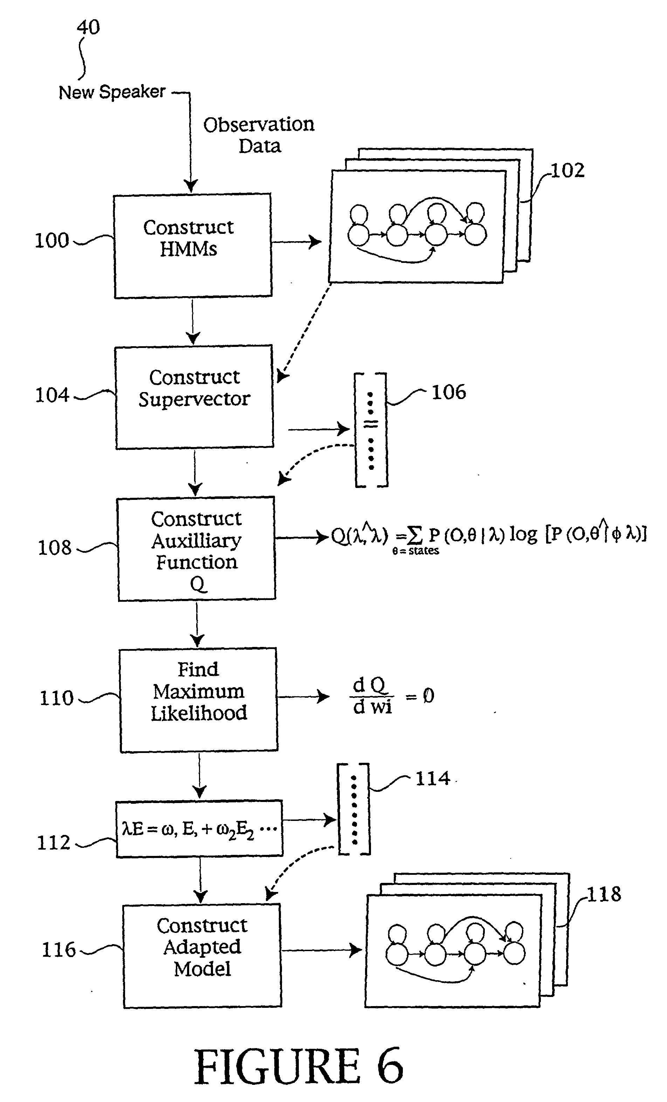

The procedure for performing adaptation using the maximum likelihood technique is shown in Figure **6**. Speech from a new speaker is used to extract a set of statistics, comprising the observation data as depicted at **100.** The extracted statistics **102** are then used in constructing a supervector as depicted at **104**. As illustrated, the extracted statistics could be used to build a set of HMM models **102**.

Using the supervector **106**, an auxiliary function Q is constructed at **108**. The presently preferred embodiment employs an auxiliary that represents the probability of generating the observed data for the pre-defined set of HMM models **102**. Subsequent manipulation of the auxiliary function Q is made easier if the function includes not only a probability term P but also the logarithm of that term, log P.

The auxiliary function is then maximized at step **110** by taking the derivative of the auxiliary function individually with respect to each of the eigenvalues W1, W2 ... Wn. For example, if the eigenspace is of dimension **100**, this system calculates **100** derivatives of the auxiliary function Q setting each to zero and solving for the respective W. While this may seem like a large computation, it is far less computationally expensive than performing the thousands of computations typically required of conventional MAP or MLLR techniques.

The resulting set of Ws, so obtained, represent the eigenvalues needed to identify the point in eigenspace corresponding to the point of maximum likelihood. Thus the set of Ws comprises a maximum likelihood vector in eigenspace. In this regard, each of the eigenvectors (eigenvectors **74**, **76** and **78** in Fig. **5**) define a set of orthogonal vectors or coordinates against which the eigenvalues are multiplied to define a point constrained within eigenspace. This maximum likelihood vector, depicted at **112**, is used to construct supervector **114** corresponding to the optimal point in eigenspace (point **66** in Fig. **4**). Supervector **114** may then be used at step **116** to construct the adapted model **118** for the new speaker.

In the context of the maximum likelihood framework of the invention, we wish to maximize the likelihood of an observation O=o1...oT with regard to the model $\lambda$. This may be done by iteratively maximizing the auxiliary function Q (below), where $\lambda$ is the current model at the iteration and $\hat{\lambda}$ is the estimated model. We have:

$$Q\left(\lambda,\hat{\lambda}\right)= \sum_{\theta \,\in states} P\left(O,\theta \mid \lambda\right)\log\left[P\left(O,\theta \mid \hat{\lambda}\right)\right]$$

As a preliminary approximation, we might want to carry out a maximization with regards to the means only. In the context where the probability P is given by a set of HMMs, we obtain the following:

$$Q(\lambda,\hat{\lambda}) = cons \ \tan t - \frac{1}{2}P(O \mid \lambda) \sum_{\substack{states \\ in\,\lambda}}^{S_\lambda} \sum_{\substack{mixt \\ gauss \\ inS}}^{M_s} \sum_{\substack{time \\ t}}^{T} \left\{\gamma_m^{(s)}(t)[n\log(2\pi) + \log \mid C_m^{(s)^{-1}} \mid + h(o_t,s)]\right.$$

where:

$$h(o_t,s)= (o_t-\hat{\mu}_m^{(s)})^T C_m^{(s)-1}(o_t-\hat{\mu}_m^{(s)})$$

and let:

$o_t$ be the feature vector at time t
$C_m^{(s)-1}$ be the inverse covariance for mixture gaussian m of state s
$\mu_m^{(s)}$ be the approximated adapted mean for state s, mixture component m
$\gamma_m^{(s)}(t)$ be the P(using mix gaussian m|$\lambda$,$o_t$

Suppose the gaussian means for the HMMs of the new speaker are located in eigenspace. Let this space be spanned by the mean supervectors $\bar{\mu}_j$ with j=1...E,

$$\bar{\mu}_j = \begin{bmatrix} \bar{\mu}_1^{(1)}(j) \\ \bar{\mu}_2^{(1)}(j) \\ \cdot \\ \cdot \\ \bar{\mu}_m^{(s)}(j) \\ \bar{\mu}_{Ms_\lambda}^{(S_\lambda)}(j) \end{bmatrix}$$

where $\bar{\mu}_m^{(s)}(j)$ represents the mean vector for the mixture gaussian m in the state s of the eigenvector (eigenmodel) j.

Then we need:

$$\overline{\mu}_j = \begin{bmatrix} \overline{\mu}_1^{(1)}(j) \\ \overline{\mu}_2^{(1)}(j) \\ \cdot \\ \cdot \\ \overline{\mu}_m^{(s)}(j) \\ \overline{\mu}_{Ms_\lambda}^{(S_\lambda)}(j) \end{bmatrix} = \sum_{j=1}^{E} w_j \overline{\mu}_j$$

The $\overline{\mu}_j$ are orthogonal and the $w_j$ are the eigenvalues of our speaker model. We assume here that any new speaker can be modeled as a linear combination of our database of observed speakers. Then

$$\hat{\mu}_m^{(s)} = \sum_{j=1}^{E} w_j \overline{\mu}_m^{(s)}(j)$$

with s in states of $\lambda$, m in mixture gaussians of M.

Since we need to maximize Q, we just need to set

$$\frac{\partial Q}{\partial w_e} = 0, \qquad e=1...E.$$

(Note that because the eigenvectors are orthogonol, $\frac{\partial w_i}{\partial w_j} = 0, i \neq j..$)

Hence we have

$$\frac{\partial Q}{\partial w_e} = 0 = \sum_{\substack{states \\ in \lambda}}^{S_\lambda} \sum_{\substack{mixt \\ gauss \\ inS}}^{M_t} \sum_{\substack{time \\ t}}^{T} \{\frac{\partial}{\partial w_e} \gamma_m^{(s)}(t) h(o_t, s)\}, e=1...E.$$

Computing the above derivative, we have:

$$0 = \sum_s \sum_m \sum_t \gamma_m^{(s)}(t) \{-\overline{\mu}_m^{(s)T}(e) C_m^{(s)-1} o_t + \sum_{j=1}^{E} w_j \overline{\mu}_m^{(s)T}(j) C_m^{(s)-1} \overline{\mu}_m^{(s)}(e)$$

from which we find the set of linear equations

$$\sum_s \sum_m \sum_t \gamma_m^{(s)}(t) \overline{\mu}_m^{(s)T}(e) C_m^{(s)-1} o_t = \sum_s \sum_m \sum_t \gamma_m^{(s)}(t) \sum_{j=1}^{E} w_j \overline{\mu}_m^{(s)T}(j) C_m^{(s)-1} \overline{\mu}_m^{(s)}(e), j = e...E.$$

Environment Adaptation

While the invention has been described thus far as a speaker adaptatiori technique, the techniques can be readily extended to environment adaptation. Many speech recognition systems are quite sensitive to environmental conditions, such as microphone placement, room acoustics, background noise, and audio signal channel quality, for example. The eigenvectors can be used to model different speaking environments, just as they are used to model different speakers.

In most instances it is desirable to accommodate the needs of both speaker adaptation and environment adaptation. To do this we simply need to insure that the training speakers are recorded in a wide variety of environments. To obtain good performance, the number of training speakers and number of eigenvoices retained may need to be larger than is necessary for eigenvoice adaptation in a quiet environment. Otherwise, the procedure is the same as described above.

To construct a speaker independent system that adapts to the environment, but not to the speaker, a slight modification to the above technique is used. First, train E speaker independent models, where E is the number of different environments in the training data. Each of the E models is trained on many different speakers in the same environment. Ideally, the E different recording environments will be as diverse as possible. Then, the eigenvoice procedure is carried out as described above. In this case, the eigenvoice vectors will represent the components of variation between environments. Thus the first eigenvector may or may not represent the male-female dimension as it did in the speaker adaptation example.

The technical effect of the present invention may be realised by a suitably programmed computer and the present invention also therefore provides computer program comprising code segments that, when loaded on a suitable computer and executed, realise the invention and a computer program product comprising a computer readable recording medium having the computer program recorded thereon.

While the invention has been described in its presently preferred embodiment, it will be appreciated that the invention can be adapted to a variety of different uses. Accordingly, the preceding examples are intended to teach the concepts of the invention without limitation upon the scope of the appended claims.

**Claims**

1. A method of performing speaker adaptation comprising the steps of:

   constructing an eigenspace to represent a plurality of training speakers by providing a set of models for said training speakers and performing principal component analysis upon said set of models to generate a set of principal component vectors that define said eigenspace;
   receiving input speech from a new speaker; and
   generating an adapted speech model using said input speech, said adapted model being a linear combination of said set of principal component vectors that lies within said eigenspace.

2. The method of claim 1 wherein said models for said training speakers define a plurality of model parameters and said step of constructing an eigenspace comprises concatenating said model parameters for said plurality of training speakers to construct a set of supervectors and performing principal component analysis upon said supervectors to thereby generate said principal component vectors.

3. The method of claim **2** wherein said models for each of said training speakers correspond to a set of different speech units and wherein each supervector is defined as a concatenation of model parameters corresponding to said speech units sorted in a predetermined order.

4. The method of claim **2** or **3** wherein said model parameters are cepstral coefficients.

5. The method of claim **2** or **3** wherein said model parameters are filter bank coefficients.

6. The method of any one of claims **1** to **6** wherein said step of performing principal component analysis generates a set of principal component vectors equal in number to the number of training speakers.

7. The method of any one of claims **1** to **6** wherein said step of performing principal component analysis generates an ordered list of principal component vectors and wherein said step of constructing an eigenspace includes discarding a predetermined portion of said ordered list to reduce the order of said eigenspace.

8. The method of any one of the claims 1 to 7 wherein said step of constraining said adapted model is performed by projecting said input speech into said eigenspace.

9. A method for performing speaker adaptation comprising the steps of:

constructing an eigenspace to represent a plurality of training speakers by providing a set of models for said training speakers and performing principal component analysis upon said set of models to generate a set of principal component vectors that define said eigenspace;

receiving input speech from a new speaker;

generating a maximum likelihood vector using said input speech; and

generating an adapted model by multiplying said maximum likelihood vector with said set of principal component vectors thereby constraining said adapted model within said eigenspace.

10. The method of claim 9 wherein said step of generating a maximum likelihood vector comprises:

defining an auxiliary function representing the probability of generating an observed datum for a predefined set of models, in which said input speech supplies said observed datum; and

maximizing said auxiliary function to find said maximum likelihood vector.

11. The method of claim 10 wherein said maximizing step is performed by:

representing said maximum likelihood vector as a set of eigenvalue variables;

taking a first derivative of said auxiliary function with respect to said eigenvalue variables; and

solving for the corresponding values of said eigenvalue variables when said first derivative is equated to zero.

12. A computer program comprising program code means that, when executed on a computer system, instruct the computer system to perform the method of any one of the preceding claims.

**Patentansprüche**

1. Verfahren zum Durchführen einer Sprecheranpassung mit den Schritten:

Aufbauen eines Eigenraums, um eine Vielzahl von Trainingssprechern darzustellen, indem ein Satz von Modellen für die Trainingssprecher bereitgestellt wird und eine Hauptkomponentenanalyse mit dem Satz von Modellen durchgeführt wird, um einen Satz von Hauptkomponentenvektoren zu erzeugen, die den Eigenraum definieren,

Empfangen von Eingangssprache von einem neuen Sprecher, und

Erzeugen eines angepassten Sprachmodells unter Verwendung der Eingangssprache, wobei das angepasste Modell eine lineare Kombination des Satzes von in dem Eigenraum liegenden Hauptkomponentenvektoren ist.

2. Verfahren nach Anspruch 1, wobei die Modelle für die Trainingssprecher eine Vielzahl von Modellparametern definieren, und der Schritt des Aufbauens eines Eigenraumes umfasst, dass die Modellparameter für die Vielzahl von Trainingssprechern verknüpft werden, um einen Satz von Supervektoren aufzubauen, und dass eine Hauptkomponentenanalyse mit den Supervektoren durchgeführt wird, um dadurch die Hauptkomponentenvektoren zu erzeugen.

3. Verfahren nach Anspruch 2, wobei die Modelle für jeden der Trainingssprecher einem Satz von unterschiedlichen Spracheinheiten entsprechen, und wobei jeder Supervektor als eine Verknüpfung von Modellparametern entsprechend den Spracheinheiten, die in einer vorbestimmten Reihenfolge sortiert sind, definiert ist.

4. Verfahren nach Anspruch 2 oder 3, wobei die Modellparameter Cepstral-Koeffizienten sind.

5. Verfahren nach Anspruch 2 oder 3, wobei die Modellparameter Filterbankkoeffizienten sind.

6. Verfahren nach einem der Ansprüche 1 bis 6, wobei der Schritt der Durchführung der Hauptkomponentenanalyse einen Satz von Hauptkomponentenvektoren in der gleichen Anzahl wie die Anzahl von Trainingssprechern erzeugt.

7. Verfahren nach einem der Ansprüche 1 bis 6, wobei der Schritt des Durchführens der Hauptkomponentenanalyse eine geordnete Liste von Hauptkomponentenvektoren erzeugt, und wobei der Schritt des Aufbauens eines Eigenraumes umfasst, dass ein vorbestimmter Teil der geordneten Liste verworfen wird, um die Ordnung des Eigenraums zu reduzieren.

**8.** Verfahren nach einem der Ansprüche 1 bis 7, wobei der Schritt des Beschränkens des angepassten Modells durchgeführt wird, indem die Eingangssprache in den Eigenraum projiziert wird.

**9.** Verfahren zum Durchführen einer Sprecheranpassung mit den Schritten:

Aufbauen eines Eigenraums, um eine Vielzahl von Trainingssprechern darzustellen, indem ein Satz von Modellen für die Trainingssprecher vorgesehen wird, und indem eine Hauptkomponentenanalyse mit dem Satz von Modellen durchgeführt wird, um einen Satz von Hauptkomponentenvektoren zu erzeugen, die den Eigenraum definieren,

Empfangen von Eingangssprache von einem neuen Sprecher,

Erzeugen eines Maximum-Likelihood-Vektors unter Verwendung der Eingangssprache, und

Erzeugen eines angepassten Modells, indem der Maximum-Likelihood-Vektor mit dem Satz von Hauptkomponentenvektoren multipliziert wird, wodurch das angepasste Modell innerhalb des Eigenraumes beschränkt wird.

**10.** Verfahren nach Anspruch 9, wobei der Schritt des Erzeugens eines Maximum-Likelihood-Vektors umfasst:

Definieren einer Hilfsfunktion, die die Wahrscheinlichkeit einer Erzeugung eines beobachteten Datenelements für einen vordefinierten Satz von Modellen darstellt, in welche die Eingangssprache das beobachtete Datenelement zuführt, und

Bestimmen des Maximums der Hilfsfunktion, um den Maximum-Likelihood-Vektor zu finden.

**11.** Verfahren nach Anspruch 10, wobei der Schritt des Bestimmens des Maximums durchgeführt wird durch:

Darstellen des Maximum-Likelihood-Vektors als einen Satz von Eigenwertvariablen,

Durchführen einer ersten Ableitung der Hilfsfunktion in Bezug auf die Eigenwertvariablen, und

Auflösen nach den entsprechenden Werten der Eigenwertvariablen, wenn die erste Ableitung gleich Null gesetzt wird.

**12.** Computerprogramm mit einem Programmcodemittel, das, wenn es auf einem Computersystem ausgeführt wird, das Computersystem anweist, das Verfahren nach einem der vorhergehenden Ansprüche durchzuführen.

**Revendications**

**1.** Procédé d'adaptation au locuteur, comprenant les étapes consistant à :

construire un espace propre pour représenter une pluralité de locuteurs d'apprentissage par stipulation d'un ensemble de modèles pour lesdits locuteurs d'apprentissage et exécution d'une analyse de composantes principales sur ledit ensemble de modèles afin de produire un ensemble de vecteurs de composantes principales qui définissent ledit espace propre ;

recevoir une entrée vocale d'un nouveau locuteur ; et

produire un modèle vocal adapté en utilisant ladite entrée vocale, ledit modèle adapté étant une combinaison linéaire de vecteurs dudit ensemble de vecteurs de composantes principales qui est incluse dans ledit espace propre.

**2.** Procédé selon la revendication 1, dans lequel lesdits modèles pour lesdits locuteurs d'apprentissage définissent une pluralité de paramètres de modèle et ladite étape de construction d'un espace propre comprend le fait de concaténer lesdits paramètres de modèle pour ladite pluralité de locuteurs d'apprentissage afin de construire un ensemble de supervecteurs et le fait d'exécuter une analyse de composantes principales sur lesdits supervecteurs afin de produire en résultat lesdits vecteurs de composantes principales.

**3.** Procédé selon la revendication 2, dans lequel lesdits modèles pour chacun desdits locuteurs d'apprentissage correspondent à un ensemble de différentes unités de parole et dans lequel chaque supervecteur est défini comme étant une concaténation de paramètres de modèle correspondant aux dites unités de parole classées dans un ordre prédéterminé.

**4.** Procédé selon la revendication 2 ou 3, dans lequel lesdits paramètres de modèle sont des coefficients cepstraux.

5. Procédé selon la revendication 2 ou 3, dans lequel lesdits paramètres de modèle sont des coefficients de banc de filtres.

6. Procédé selon l'une quelconque des revendications 1 à 5, dans lequel ladite étape d'exécution d'une analyse de composantes principales produit un ensemble de vecteurs de composantes principales en nombre égal au nombre de locuteurs d'apprentissage.

7. Procédé selon l'une quelconque des revendications 1 à 6, dans lequel ladite étape d'exécution d'une analyse de composantes principales produit une liste ordonnée de vecteurs de composantes principales et dans lequel ladite étape de construction d'un espace propre comprend le fait d'abandonner une partie prédéterminée de ladite liste ordonnée afin de réduire la dimension dudit espace propre.

8. Procédé selon l'une quelconque des revendications 1 à 7, dans lequel ladite étape d'inclusion dudit modèle adapté est exécutée par projection de ladite entrée vocale sur ledit espace propre.

9. Procédé d'adaptation au locuteur, comprenant les étapes consistant à:

construire un espace propre pour représenter une pluralité de locuteurs d'apprentissage par stipulation d'un ensemble de modèles pour lesdits locuteurs d'apprentissage et exécution d'une analyse de composantes principales sur ledit ensemble de modèles afin de produire un ensemble de vecteurs de composantes principales qui définissent ledit espace propre;
recevoir une entrée vocale d'un nouveau locuteur;
produire un vecteur de vraisemblance maximale en utilisant ladite entrée vocale; et
produire un modèle adapté par multiplication dudit vecteur de vraisemblance maximale par ledit ensemble de vecteurs de composantes principales pour inclure de ce fait ledit modèle adapté à l'intérieur dudit espace propre.

10. Procédé selon la revendication 9, dans lequel ladite étape de production d'un vecteur de vraisemblance maximale comprend le fait de:

définir une fonction auxiliaire représentant la probabilité de production d'une donnée observée pour un ensemble prédéfini de modèles, où ladite entrée vocale fournit ladite donnée observée; et
maximiser ladite fonction auxiliaire afin de trouver ledit vecteur de vraisemblance maximale.

11. Procédé selon la revendication 10, dans lequel ladite étape de maximisation est exécutée par les opérations consistant à:

représenter ledit vecteur de vraisemblance maximale par un ensemble de variables de valeur propre;
calculer une dérivée première de ladite fonction auxiliaire par rapport aux dites variables de valeur propre; et
trouver les valeurs correspondantes desdites variables de valeur propre lorsque ladite dérivée première est rendue égale à zéro.

12. Programme d'ordinateur comprenant des instructions de programme qui, lorsqu'elles sont exécutées sur un système informatique, chargent le système informatique d'exécuter le procédé de l'une quelconque des revendications précédentes.

FIGURE 1

# FIGURE 2

40

New Speaker

42

Train SD
Models
(one per speaker)

44

46

Construct
Supervector

$a_1$
$a_2$
...
$b_1$
$b_2$
...
$z_1$
$z_2$

48

38

50

Contruct New
Set of HMMs
Based on
Supervector

52

Adapted Model

54

Optionally
Iterate to
Further Adapt
Model

# FIGURE 3

FIGURE 4

FIGURE 5

40

New Speaker

Observation
Data

100 — Construct
HMMs

102

104 — Construct
Supervector

106

108 — Construct
Auxilliary
Function
Q

$$Q(\lambda, \hat{\lambda}) = \sum_{\theta = states} P(O, \theta \mid \lambda) \log [P(O, \hat{\theta} \mid \phi \lambda)]$$

110 — Find
Maximum
Likelihood

$$\frac{dQ}{dwi} = 0$$

114

112 — $\lambda E = \omega, E, + \omega_2 E_2 \cdots$

116 — Construct
Adapted
Model

118

# FIGURE 6